# EUROPÄISCHE PATENTANMELDUNG

(11) **EP 0 686 837 A2**
(43) Veröffentlichungstag der Anmeldung: **13.12.1995**
(21) Anmeldenummer: 95105070.7
(22) Anmeldetag: 05.04.1995
(51) Int. Cl.: G01L 1/22

(54) **Verfahren zum Schutz von elektromechanischen Dehnungsmesselementen**

(30) Priorität: 06.06.1994 DE 4419687
(71) Anmelder: GTM GASSMANN THEISS MESSTECHNIK GMBH, D-64342 Seeheim-Jugenheim (DE)
(72) Erfinder:
(74) Vertreter: Katscher, Helmut, Dipl.-Ing.

(57) **Zusammenfassung**

Zum Schutz von elektromechanischen Dehnungsmeßelementen, insbesondere Dehnungsmeßstreifen (2) an Kraftaufnehmern wird eine das Dehnungsmeßelement (2) und seine elektrischen Anschlüsse vollständig überdeckende Schutzmasse aufgebracht. Die Schutzmasse besteht aus einem Schmierstoff mit fettartiger Konsistenz, beispielsweise Silikonfett aus Polydimethylsiloxan und einem anorganischen Verdicker. Der Dehnungsmeßstreifen (2) und seine elektrischen Anschlüsse werden durch den Schmierstoff gegen alle auftretenden mechanischen und chemischen Umgebungseinflüsse geschützt; insbesondere wird auch das Eindringen von Feuchtigkeit und die Korrosion verhindert.

## Beschreibung

Die Erfindung betrifft ein verfahren zum Schutz von an Kraftaufnehmern angebrachten elektromechanischen Dehnungsmeßelementen, insbesondere Dehnungsmeßstreifen, durch Aufbringen einer das Dehnungsmeßelement und seine elektrischen Anschlüsse vollständig überdeckenden, elektrisch isolierenden, an der Aufnehmeroberfläche haftenden Schutzmasse.

Elektromechanische Dehnungsmeßelemente, üblicherweise in der Ausführung als Dehnungsmeßstreifen, werden in weiten Bereichen der Technik eingesetzt, um Dehnungen an Bauteilen, Proben oder Meßkörpern zu erfassen. Aus den so gemessenen Dehnungen kann auf die auftretenden Kräfte geschlossen werden. Deshalb wird in diesem Zusammenhang zusammenfassend der Begriff "Kraftaufnehmer" verwendet.

Die an den Kraftaufnehmern angebrachten Dehnungsmeßelemente und ihre elektrischen Anschlüsse sind durch mechanische und chemische Einflüsse, insbesondere Korrosion, gefährdet; der Zutritt von Feuchtigkeit beeinträchtigt die elektrische Isolation und wirkt sich daher besonders störend aus. Deshalb ist es erforderlich, die Meßstelle an Kraftaufnehmern, nämlich das Dehnungsmeßelement und seine elektrischen Anschlüsse, gegenüber der Umgebung so zu schützen, daß die genannten störenden Einflüsse von der Meßstelle ferngehalten werden.

Es ist bekannt, die Meßstelle hermetisch abzudichten und das Innere des abgedichteten Raumes mit einem trockenen, inerten Schutzgas zu füllen, so daß der Zutritt von Feuchtigkeit oder ein Korrosionseinfluß verhindert wird. Die Abdichtung erfolgt hierbei beispielsweise durch Schweißen. Wenn Fehler bei der Funktion des Kraftaufnehmers auftreten und die hermetische Abdichtung geöffnet werden muß, dann muß der Kraftaufnehmer in einem anschließenden aufwendigen Bearbeitungsablauf, durch Schweißen, Gasfüllung und Dichtheitsprüfung, wieder hermetisch abgedichetet werden. Da die die elektrischen Anschlüsse bildenden Leitungsdrähte im abgedichteten Raum nicht vollständig festgelegt sind, kann eine Zerstörung der Anschlüsse durch mechanische Schwingungen erfolgen.

Bei derartigen Gasfüllungen tritt bei Temperaturänderungen und evtl. bestehender mangelhafter Dichtheit ein Atmungseffekt auf. Bei Temperaturerhöhung wird Gas nach außen gedrückt; bei sinkender Temperatur wird Umgebungsluft mit darin enthaltener Luftfeuchtigkeit eingesogen, was zu Isolationsfehlern und Korrosion führt.

Daneben ist es auch bekannt, den die Meßstelle umgebenden Raum mit einer zähen, kittartigen Masse auszufüllen. Bei ungünstigen geometrischen Formen des Kraftaufnehmers, insbesondere einer die Dehnungsmeßelemente enthaltenden Ausnehmung, ist es jedoch schwierig, diese Masse so aufzutragen, daß sie den gesamten Raum füllt. An glatten, beispielsweise lackierten Flächen können Haftungsprobleme und die damit verbundene Gefahr einer Beschädigung auftreten. Eine korrosionshemmende Wirkung besteht im allgemeinen nicht.

Bei einem bekannten Verfahren der eingangs genannten Gattung wird der die Meßstelle umgebende Raum mit einer Kunststoffmasse gefüllt, die im flüssigen Zustand als Zwei-Komponenten-Kunststoff eingebracht wird und dann durch eine chemische Reaktion in den Endzustand übergeht. Im Endzustand kann die Kunststoffmasse eine feste, gummiartige oder gelartige Konsistenz aufweisen. Durch die Kunststoffmasse wird zwar Feuchtigkeit von der Meßstelle ferngehalten und der vorher beschriebene Atmungseffekt unterbunden. Wenn aber wegen auftretender Funktionsfehler des Kraftaufnehmers die Kunststoffmasse entfernt werden muß, so führt dies infolge der ausgehärteten Konsistenz der Kunststoffmasse in den meisten Fällen zur Zerstörung des Dehnungsmeßelements und/oder seiner elektrischen Anschlüsse.

Außerdem besteht auch bei gelartiger Konsistenz der Kunststoffmasse die Gefahr, daß infolge von Schwingungsbewegungen der Kunststoffmasse die eingebetteten Anschlußdrähte abreißen. Diese Gefahr besteht insbesondere dann, wenn die Haftung der Kunststoffmasse an der Aufnehmeroberfläche unzureichend ist.

Wenn sich die Kunststoffmasse ganz oder teilweise von der Aufnehmeroberfläche löst, kann Feuchtigkeit in den so gebildeten Spalt durch Kapillarwirkung bis zur Meßstelle vordringen.

Da die verwendeten Zwei-Komponenten-Kunststoffe im Aufbringungszustand flüssig sind, muß der auszufüllende Raum beim Aufbringen horizontal angeordnet sein, um ein Auslaufen des Kunststoffs zu verhindern. Eine korrosionshemmende Wirkung besteht im allgemeinen nicht; die Kunststoffmasse kann von Rost unterwandert werden.

Aufgabe der Erfindung ist es daher, ein Verfahren der eingangs genannten Gattung so auszubilden, daß unter allen auftretenden Umgebungseinflüssen ein vollständiger Schutz der Meßstelle an Kraftaufnehmern gewährleistet ist. Zugleich soll dabei eine Nachrüstung, Montage oder Reparatur am Einsatzort unter Beibehaltung der Schutzwirkung ermöglich werden.

Diese Aufgabe wird erfindungsgemäß dadurch gelöst, daß als Schutzmasse ein Schmierstoff mit fettartiger Konsistenz verwendet wird.

Unter "fettartiger Konsistenz" ist zu verstehen, daß der verwendete Schmierstoff nicht fließt, so daß er unabhängig von der Lage der Meßstelle aufgebracht werden kann und daß er zumindest in Wasser und den meisten wässrigen Lösungen unlöslich ist. Eine solche Konsistenz entspricht einer NLGI-Klasse über 1 nach DIN 51 818, vorzugsweise einer NLGI-Klasse von 2-3. Stoffe mit dieser Konsistenz werden üblicherweise als Schmierstoffe in Lagern eingesetzt.

Die Aufbringung der Schutzmasse ist sehr einfach, weil der Schmierstoff wie eine Paste mechanisch aufgetragen werden kann, beispielsweise mit einer Spritze, einer Spachtel oder einem Pinsel, und zwar unabhängig davon, ob sich die Meßstelle in einer Vertiefung oder an einer glatten Oberfläche des Kraftaufnehmers befindet.

Der Schmierstoff haftet unmittelbar auf der Oberfläche. Seine Konsistenz verhindert auch bei Schwingungen oder anderen mechanischen Einflüssen, daß auf die Grenzfläche zwischen dem Schmierstoff und der Oberfläche eine ablösende Kraft ausgeübt wird; deshalb bildet sich hier kein Spalt, in den Feuchtigkeit oder Öl eindringen könnte. Dadurch bleibt der Korrosionsschutz bestehen.

Zu Reparaturzwecken kann der Schmierstoff in einfacher Weise entfernt, beispielsweise abgeschabt, abgesaugt oder mit einem geeigneten Lösungsmittel ausgewaschen werden; dabei treten keine unzulässigen mechanischen Beanspruchungen der Dehnungsmeßelemente oder der elektrischen Anschlüsse auf, so daß die Gefahr von Beschädigungen ausgeschlossen ist.

Durch die Konsistenz des als Schutzmasse verwendeten Schmierstoffs ergibt sich eine hervorragende mechanische Dämpfung bei Schwingungsbeanspruchung der Anschlußdrähte oder sonstiger Teile des Dehnungsmeßelements.

Vorzugsweise wird als Schutzmasse ein synthetischer Schmierstoff verwendet. Diese Schmierstoffe haben einen über sehr lange Zeit unverändert bleibenden hohen Isolationswiderstand und eine gleichbleibende Formstabilität, so daß auch über sehr lange Zeiträume kein allmähliches Fließen des Schmierstoffs eintritt. Die Haftungseigenschaften synthetischer Schmierstoffe und die Beständigkeit gegen Wasser, Öl und Chemikalien sind sehr gut, so daß sich ein hervorragender Korrosionsschutz ergibt.

Vorzugsweise wird als Schutzmasse ein Fett mit einer synthetischen Flüssigkeit als Grundsubstanz mit einem Verdicker verwendet, wobei Silikonfett besonders geeignet ist.

Als bevorzugte Schutzmasse hat sich erfindungsgemäß ein Silikonfett erwiesen, das aus Polydimethylsiloxan und einem anorganischen Verdicker besteht.

Stattdessen kann als Schutzmasse auch ein Schmierstoff auf organischer Basis verwendet werden, vorzugsweise ein Fett mit einem Mineralöl als Grundsubstanz mit einem Verdicker.

Nachfolgend wird ein Ausführungsbeispiel der Erfindung erläutert, das in der Zeichnung dargestellt ist. Es zeigt:

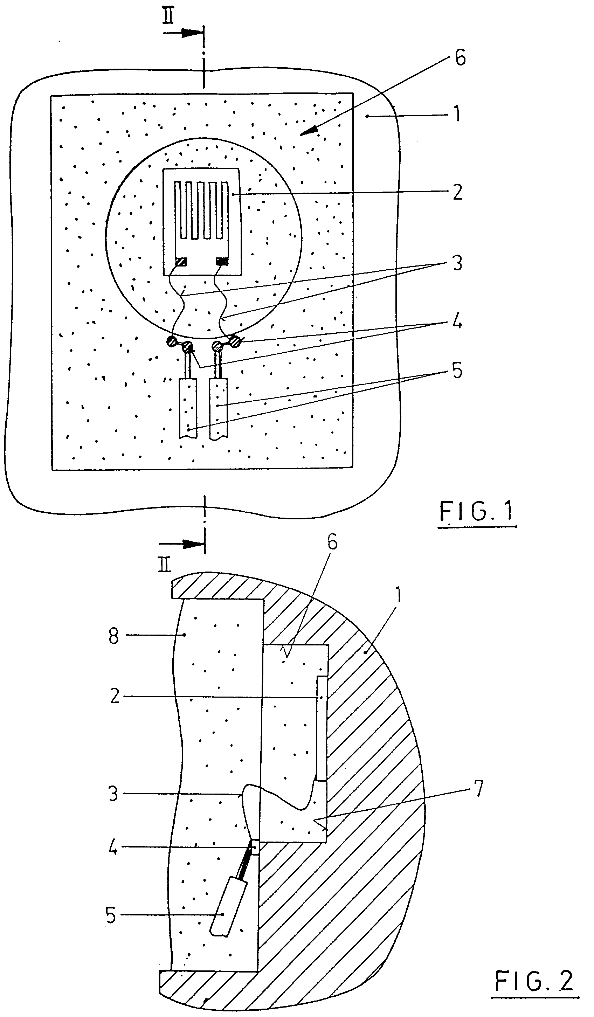

Fig. 1 eine Draufsicht auf eine Meßstelle an einem Kraftaufnehmer und
Fig. 2 einen Schnitt längs der Linie II-II in Fig. 1.

Bei dem dargestellten Ausführungsbeispiel besteht ein Kraftaufnehmer aus einer Meßfeder 1, von der in der Zeichnung nur ein Ausschnitt gezeigt ist, und einem daran aufgebrachten, ein Dehnungsmeßelement bildenden Dehnungsmeßstreifen 2. Elektrische Anschlußdrähte 3 führen zu Lötstützpunkten 4, an denen elektrische Anschlußlitzen 5 angeschlossen sind, die zu einer (nicht dargestellten) Auswerteschaltung führen.

Der Dehnungsmeßstreifen 2 ist in einer Ausnehmung 6 der Meßfeder 1 angeordnet. Der Grund 7 der Ausnehmung 6 bildet die Aufnehmerfläche, an der der Dehnungsmeßstreifen 2 appliziert ist.

In der Ausnehmung 6 ist als Schutzmasse zum Schutz des Dehnungsmeßstreifens 2 und seiner elektrischen Anschlüsse eine Füllung 8 aus einem Schmierstoff mit fettartiger Konsistenz aufgebracht. Die Füllung 8 überdeckt den Dehnungsmeßstreifen 2 und seine elektrischen Anschlüsse vollständig und füllt die Ausnehmung 6 weitgehend.

Bei dem dargestellten Ausführungsbeispiel wird als Füllung 8 zur Bildung der Schutzmasse ein Silikonfett verwendet, das aus Polydimethylsiloxan und einem anorganischen Verdicker besteht. Zum Aufbringen der Füllung wird beispielsweise eine 10-ml-Kunststoffspritze aus dem medizinischen Bereich verwendet. Damit wird eine sehr exakte und vollständige, blasenfreie Füllung des abzudichtenden Raumes ermöglicht.

Es handelt sich dabei um ein weißdurchscheinendes, steifes Silikonfett, das in Wasser und einigen Alkoholen unlöslich ist und gegen die meisten wässrigen Lösungen, organischen Salzen sowie verdünnten Säuren und Alkalien beständig ist. Der Einsatzbereich geht von -40°C bis + 200°C; in diesem Bereich ändert sich die Konsistenz kaum. Das Fett besitzt keinen Schmelz- oder Tropfpunkt. Nach DIN 51 818 wird die Konsistenz der NLGI-Klasse 2-3 (Nationsl Lubricating Grease Institute) zugeordnet.

Der Schmierstoff kann durch Absaugung, ggf. nach vorherigem Verdünnen mit Lösungsmittel, erfolgen.

Durch die Verwendung des Schmierstoffes in Verbindung mit einer konstruktiv sehr einfachen Abdeckung, z.B. einem schraubbaren Deckel mit O-Ring-Dichtung, ergibt sich ein Schutzgrad IP 67 nach DIN 40050, der in der Regel nur durch hermetisch dichtes Verschweißen übertroffen wird. Für die überwiegende Anzahl der Verwendungsfälle reicht dieser Schutzgrad aus, bei dem der Aufnehmer zeitweise in Wasser eingetaucht werden kann.

Durch die gleichzeitige Einbettung der Anschlußlitzen in den Schmierstoff wird die Gefahr, daß Feuchtigkeit bei einem mechanisch beschädigten Meßkabel über Kapillarwirkung in den Aufnehmerinnenraum eindringt, vermieden.

## Patentansprüche

1. Verfahren zum Schutz von an Kraftaufnehmern angebrachten elektromechanischen Dehnungsmeßelementen, insbesondere Dehnungsmeßstreifen, durch Aufbringen einer das Dehnungsmeßelement und seine elektrischen Anschlüsse vollständig überdeckenden, elektrisch isolierenden, an der Aufnehmeroberfläche haftenden Schutzmasse, dadurch gekennzeichnet, daß als Schutzmasse ein Schmierstoff mit fettartiger Konsistenz verwendet wird.

2. Verfahren nach Anspruch 1, dadurch gekennzeichnet, daß als Schutzmasse ein synthetischer Schmierstoff verwendet wird.

3. Verfahren nach Anspruch 1, dadurch gekennzeichnet, daß als Schutzmasse ein Schmierstoff auf organischer Basis verwendet wird.

4. Verfahren nach Anspruch 2, dadurch gekennzeichnet, daß als Schutzmasse ein Fett mit einer synthetischen Flüssigkeit als Grundsubstanz mit einem Verdicker verwendet wird.

5. Verfahren nach Anspruch 3, dadurch gekennzeichnet, daß als Schutzmasse ein Fett mit einem Mineralöl als Grundsubstanz mit einem Verdicker verwendet wird.

6. Verfahren nach Anspruch 2, dadurch gekennzeichnet, daß als Schutzmasse ein Silikonfett verwendet wird.

7. Verfahren nach Anspruch 6, dadurch gekennzeichnet, daß das Silikonfett aus Polydimethylsiloxan und einem anorganischen Verdicker besteht.
